# DEMANDE DE BREVET EUROPEEN

(11) **EP 4 729 336 A1**
(43) Date de publication de la demande: **22.04.2026**
(21) Numéro de dépôt: 25206162.7
(22) Date de dépôt: 01.10.2025
(51) Int. Cl.: B60L 50/64, B60L 58/20, B60L 58/22

(54) **VEHICULE AUTOMOBILE A BATTERIE UNIQUE**

(30) Priorité: 18.10.2024 FR 2411297
(71) Demandeur: AMPERE s.a.s., 92100 Boulougne-Billancourt (FR)
(72) Inventeur: MONTI, Alessandro, 78280 Guyancourt (FR)
(74) Mandataire: Renault Group

(57) **Abrégé**

L'invention concerne un dispositif tel que par exemple un véhicule automobile (1) comportant un réseau électrique de bord (40), au moins un moteur électrique (20) de propulsion du véhicule automobile, et une batterie d'accumulateurs (10).

Selon l'invention, la batterie d'accumulateurs (10) de ce dispositif comporte un boîtier (13) qui loge des premières cellules de batterie (11) et des secondes cellules de batterie (12) adaptées à être isolées électriquement des premières cellules de batterie, et duquel émergent des premières bornes de connexion des premières cellules de batterie au réseau électrique de bord et des secondes bornes de connexion des secondes cellules de batterie au moteur électrique, et il est prévu un convertisseur DC-DC (30) qui est branché, d'un côté, aux secondes bornes de connexion, et, de l'autre, au réseau électrique de bord et qui est piloté par un calculateur.

## Description

### DOMAINE TECHNIQUE DE L'INVENTION

La présente invention concerne de manière générale la gestion de l'énergie électrique dans un véhicule automobile.

Elle concerne plus particulièrement un dispositif tel qu'un véhicule automobile, comportant deux réseaux électriques fonctionnant à des tensions distinctes, et une batterie d'accumulateurs.

Elle concerne également un procédé de pilotage de ce dispositif.

### ETAT DE LA TECHNIQUE

Les véhicules automobiles électriques ou hybrides sont généralement équipés de deux batteries.

Une première batterie dite de traction est principalement dédiée à la traction du véhicule.

Généralement, une telle batterie de traction est de type lithium-ion haute tension (son électrolyte comportant une solution de sel de lithium). La capacité d'une telle batterie est généralement comprise entre 20 et 100KWh.

Une seconde batterie dite d'accessoire est principalement dédiée à l'alimentation en courant du réseau de bord du véhicule (calculateurs et appareils électriques à faible consommation tels que des résistances chauffantes, des ventilateurs, des actionneurs, des capteurs...). Elle garantit, grâce à son niveau de fiabilité élevé, l'alimentation des dispositifs essentiels du véhicule tels que les systèmes de freinage et de direction. En outre, elle est en mesure de fournir de l'énergie électrique pendant les longues périodes d'inutilisation du véhicule.

Généralement, une telle batterie d'accessoire est de type au plomb (l'anode étant généralement composée de plomb tandis que la cathode est constituée de dioxyde de plomb). La capacité d'une telle batterie est généralement comprise entre 20 et 60Ah (ce qui correspond à quelques centaines de Wh seulement).

Cette seconde batterie souffre de divers inconvénients.

Elle est notamment lourde et encombrante, et bénéficie d'une durée de vie restreinte (de l'ordre de 3 à 4 ans).

De surcroît, à la suite de nouvelles normes visant à limiter l'utilisation du plomb, il ne sera prochainement plus possible d'en employer. Elle devra alors être remplacée par des batteries d'accessoire sans plomb (par exemple lithium-ion), qui souffrent d'autres problèmes, notamment de coût.

### PRESENTATION DE L'INVENTION

Afin de remédier aux inconvénients précités de l'état de la technique, la présente invention propose de rassembler les deux batteries en une seule et même batterie, sans toutefois les fusionner complètement.

En effet, la solution consistant à utiliser une seule et même batterie pour alimenter une charge telle qu'un moteur électrique et le réseau de bord ne serait pas suffisamment sûre, notamment en cas de défaillance en roulage ou lors d'un stationnement prolongé du véhicule.

Alors, on propose selon l'invention un dispositif comportant :
- un premier réseau électrique fonctionnant à une première tension,
- un second réseau électrique fonctionnant à une seconde tension supérieure à la première tension,
- une batterie d'accumulateurs, et
- un chargeur adapté à charger la batterie d'accumulateurs et fonctionnant sur l'une des première et seconde tensions,
   la batterie d'accumulateurs comportant un boîtier qui loge des premières cellules de batterie et des secondes cellules de batterie adaptées à être isolées électriquement des premières cellules de batterie, et duquel émergent des premières bornes de connexion des premières cellules de batterie au premier réseau électrique et des secondes bornes de connexion des secondes cellules de batterie au second réseau électrique, et
- un convertisseur DC-DC qui est branché, d'un côté, aux secondes bornes de connexion, et, de l'autre, au premier réseau électrique et qui est piloté par un calculateur.

De préférence, le dispositif est formé par un véhicule automobile, auquel cas le premier réseau électrique est un réseau électrique de bord et le second réseau électrique comportant au moins une charge ici formée par un moteur électrique de propulsion du véhicule automobile.

Ainsi, grâce à l'invention, le boîtier loge des cellules qui peuvent être identiques mais qui ne sont pas toutes connectées ensemble, certaines étant dédiées à l'alimentation à haute tension du moteur électrique lorsque les autres sont dédiées à l'alimentation à basse tension du réseau de bord.

Cette structure présente de nombreux avantages. Elle offre en effet les avantages procurés par l'utilisation d'une batterie unique sans souffrir des inconvénients associés.

Par exemple, toutes les cellules peuvent bénéficier des mêmes prestations, sans qu'il ne soit nécessaire de multiplier les dispositifs permettant de procurer ces prestations. Ainsi, les cellules peuvent toutes être gérées par un même système de gestion de batterie (BMS), elles peuvent être chauffées ou refroidies par un même circuit...

En outre, il est possible d'utiliser les mêmes premières et secondes cellules de batterie, ce qui facilite la fabrication de la batterie et en réduit le coût compte tenu du grand volume de cellules achetées.

Enfin, le branchement du convertisseur DC-DC depuis les secondes cellules de batteries vers le réseau électrique de bord, lequel est par ailleurs alimenté par les premières cellules de batterie, permet d'ajuster le point de fonctionnement de ce convertisseur de façon qu'il présente un rendement optimal.

Cette architecture permet de façon plus générale d'utiliser les convertisseur DC-DC de façon optimale dans diverses configurations, comme cela sera bien décrit ci-après.

Préférentiellement, le boîtier loge un unique système de gestion de batterie qui est adapté à communiquer avec les premières et secondes cellules de batterie.

Avantageusement, le boîtier loge au moins un premier interrupteur qui s'interpose entre l'une des premières bornes et le premier réseau électrique, et au moins un second interrupteur qui s'interpose entre l'une des secondes bornes et une charge du second réseau électrique (par exemple le moteur), les premier et second interrupteurs étant commandés par le système de gestion de batterie et/ou par le calculateur.

Avantageusement, le boîtier loge un circuit de refroidissement et/ou de chauffage adapté à refroidir et/ou chauffer les premières et secondes cellules de batterie.

Préférentiellement, les premières et secondes cellules de batterie sont toutes identiques.

L'invention propose également un procédé de pilotage d'un convertisseur DC-DC d'un dispositif tel que précité, selon lequel il est prévu de caractériser un point de fonctionnement du dispositif et de piloter le convertisseur DC-DC en fonction du point de fonctionnement entre :
- un état direct dans lequel le courant issu des secondes cellules de batterie alimentent au moins le premier réseau électrique, et
- un état inversé dans lequel le courant issu des premières cellules de batterie alimentent au moins la charge du seconde réseau électrique.

D'autres caractéristiques avantageuses et non limitatives du procédé conforme à l'invention, prises individuellement ou selon toutes les combinaisons techniquement possibles, sont les suivantes :
- le convertisseur DC-DC peut être piloté, en fonction du point de fonctionnement, en un état arrêté dans lequel les secondes cellules de batterie sont isolées électriquement des premières cellules de batterie et du premier réseau électrique ;
- lorsque le moteur électrique est alimenté en courant par les secondes cellules de batterie, il est prévu de déterminer un niveau de charge des premières cellules de batteries, puis au moins si le niveau de charge mesuré dépasse un premier seuil, de piloter le convertisseur DC-DC en état inversé (de préférence à une intensité maximisant le rendement du convertisseur DC-DC);
- lorsque la charge du second réseau électrique est alimentée en courant par les secondes cellules de batterie, il est prévu de déterminer un niveau de charge des premières cellules de batteries, puis, au moins si le niveau de charge mesuré est inférieur à un second seuil, de piloter le convertisseur DC-DC en état direct de telle sorte que les secondes cellules de batteries alimentent le premier réseau électrique et rechargent les premières cellules de batterie à une intensité maximisant le rendement du convertisseur DC-DC ;
- si le niveau de charge mesuré est supérieur au second seuil, il est prévu de piloter le convertisseur DC-DC en état inversé ;
- lorsque la charge est alimentée en courant par les secondes cellules de batterie, il est prévu de déterminer l'intensité du courant consommé par le premier réseau électrique, puis, au moins si l'intensité mesurée est inférieure à un troisième seuil, de piloter le convertisseur DC-DC en état arrêté de telle sorte que seules les premières cellules de batterie alimentent le premier réseau électrique ;
- lorsque le moteur électrique est à l'arrêt, il est prévu de piloter le convertisseur DC-DC en état arrêté de telle sorte que seules les premières cellules de batterie alimentent le premier réseau électrique ;
- lorsque la batterie d'accumulateurs est connectée à un réseau extérieur de charge (via le chargeur), il est prévu de commencer par piloter le convertisseur DC-DC en état arrêté de telle sorte que seules les premières cellules de batterie alimentent le premier réseau électrique et que seules les secondes cellules de batterie se chargent, puis, avant que les secondes cellules de batterie ne soient complètement chargées, de piloter le convertisseur DC-DC en état direct de telle sorte que les premières et secondes cellules de batterie se chargent (les premières cellules se chargeant de préférence à une intensité maximisant le rendement du convertisseur DC-DC).

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique d'un véhicule automobile conforme à l'invention ;
[Fig. 2] est une vue homologue de celle de la figure 1, illustrant le véhicule dans une première configuration de charge ;
[Fig. 3] est une vue homologue de celle de la figure 1, illustrant le véhicule dans une seconde configuration de roulement ;
[Fig. 4] est une vue homologue de celle de la figure 1, illustrant le véhicule dans une troisième configuration de roulement ;
[Fig. 5] est une vue homologue de celle de la figure 1, illustrant le véhicule dans une quatrième configuration de roulement ;
[Fig. 6] est une vue homologue de celle de la figure 1, illustrant le véhicule dans une cinquième configuration de roulement ;
[Fig. 7] est une vue homologue de celle de la figure 1, illustrant le véhicule dans une sixième configuration de stationnement ;
[Fig. 8] illustre trois graphiques, un graphique supérieur représentant l'évolution dans le temps de la charge des secondes cellules de batterie du véhicule automobile de la figure 1, un graphique intermédiaire représentant l'évolution dans le temps de la puissance délivrée par le convertisseur DC-DC de ce véhicule automobile, un graphique inférieur représentant l'évolution dans le temps de la charge des premières cellules de batterie de ce véhicule automobile.

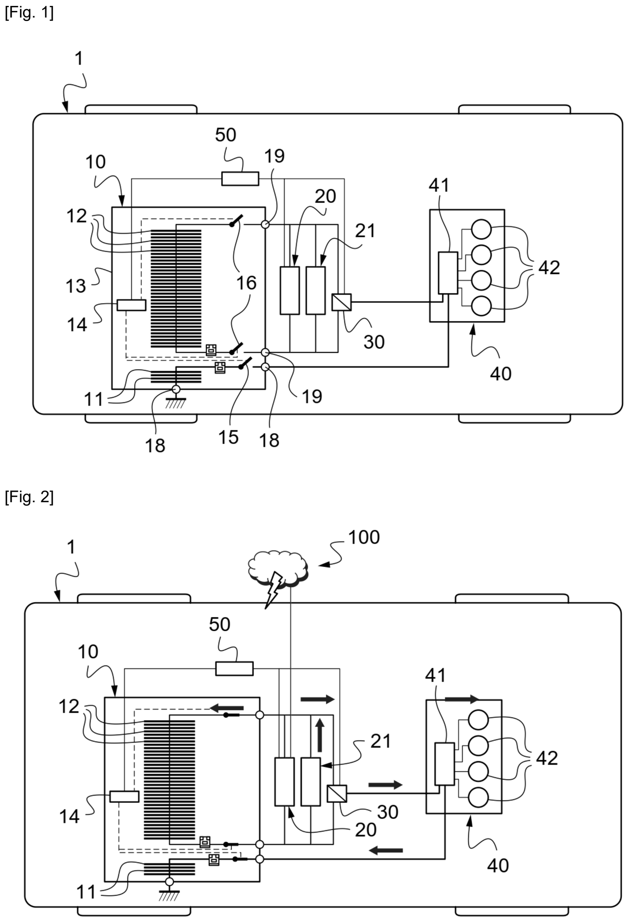

Sur la figure 1, on a représenté un véhicule automobile 1.

**Il** pourrait s'agir de n'importe quel type de véhicule, par exemple un camion, un bus, un bateau, un avion...

**Il** s'agit ici d'une voiture comportant classiquement un châssis, quatre roues, un groupe motopropulseur, un système de direction et une ligne de freinage.

Ces différents éléments étant bien connus, ils ne seront pas décrits ici en détail.

On pourra préciser seulement que le groupe motopropulseur pourra être indifféremment du type hybride ou purement électrique. Dans tous les cas, il comportera une batterie d'accumulateurs 10 et au moins un moteur électrique 20. Il comportera en outre de préférence un chargeur 21 pour recharger la batterie d'accumulateurs 10.

Le moteur électrique 20 pourra être de tout type (à flux axial ou radial). Il comportera une partie onduleur permettant de transformer le courant continu en courant alternatif, et au moins une partie motrice.

Le chargeur 21 pourra également se présenter sous diverses formes. Il comportera en pratique un bornier adapté à être connecté à un réseau électrique extérieur 100, et des composants électriques permettant de connecter le bornier à la batterie d'accumulateurs 10. Cette connexion pourra se faire de façon directe, si le réseau électrique extérieur 100 délivre une tension continue, ou via un convertisseur AC-DC si le réseau électrique extérieur 100 délivre une tension alternative.

Le moteur électrique 20 forme un composant haute tension du véhicule, en ce sens qu'il est prévu pour fonctionner à des tensions élevées, au moins supérieure à 40V et typiquement de 400 ou 800V.

Le véhicule peut comporter d'autre composants haute tension, tels qu'un système de chauffage et/ou de climatisation.

L'ensemble de ces composants haute tension sont connectés au sein d'un réseau haute tension.

Le véhicule automobile comporte par ailleurs un réseau de bord 40 distinct de ce réseau haute tension.

Le réseau de bord 40 est ici défini comme comprenant tous les équipements du véhicule devant être alimentés à une tension réduite, au moins inférieure à 60 V et ici de l'ordre de 12 à 14 V. il s'agit donc d'un réseau basse tension.

Tel qu'illustré sur les figures, ce réseau de bord 40 comporte en entrée un dispositif de coupure de courant 41 tel qu'un boîtier fusible terminal. Il comporte par ailleurs, branchés à la sortie de ce dispositif de coupure de courant 41, des équipements 42 tels que des actionneurs, des capteurs, des contrôleurs...

Le véhicule comporte par ailleurs un calculateur 50, qui forme ici l'un des équipements du réseau de bord 40, bien que pour la clarté des figures, il soit représenté à part. Ce calculateur 50 comporte un processeur, une mémoire et une interface d'échange de données, connectée par exemple à un réseau CAN du véhicule.

Grâce à cette interface, le calculateur est adapté à recevoir différentes informations caractérisant un point de fonctionnement du véhicule, par exemple l'état branché ou non du chargeur 21 au réseau électrique extérieur 100, des données issues de la batterie d'accumulateurs 10...

Grâce à cette interface également, le calculateur est adapté à commander différents composants électriques, comme cela apparaîtra clairement dans la suite de cet exposé.

Grâce à sa mémoire, le calculateur 50 mémorise une application informatique, constituée de programmes d'ordinateur comprenant des instructions dont l'exécution par le processeur permet la mise en œuvre par le calculateur du procédé décrit ci-après.

La batterie d'accumulateurs 10 est de préférence unique, en ce sens qu'il n'est pas prévu dans le véhicule d'autre batterie comportant des cellules électrochimiques.

Par conséquent, cette unique batterie d'accumulateurs 10 est prévue pour alimenter:
- le réseau électrique de bord 40 à une première tension électrique, et
- le réseau haute tension du véhicule, notamment le ou les moteur(s) électrique(s) 20, à une seconde tension électrique supérieure à la première tension électrique.

Cette batterie d'accumulateurs 10 comporte pour cela un unique boîtier 13 hermétiquement fermé.

Ce boîtier 13 loge deux types de cellules de batterie électrochimiques (ci-après simplement appelées cellules).

La ou les cellule(s) 11 du premier type (on parlera ci-après de premières cellules 11) sont de préférence toutes identiques.

Les cellules 12 du second type (on parlera ci-après de secondes cellules 12) sont de préférence aussi toutes identiques.

Les premières cellules 11 et les secondes cellules 12 sont de préférence encore toutes identiques, ce qui permettra de réaliser des économies d'échelle lors de la fabrication de la batterie.

Ainsi, ces cellules 11, 12 sont distinguées en deux « types » non pas nécessairement en fonction de leurs caractéristiques intrinsèques, mais en ce sens qu'elles sont branchées de façon à former deux ensembles de cellules distincts, pouvant être isolés électriquement l'un de l'autre.

Ces cellules sont typiquement de type lithium-ion. Elles présentent par exemple une tension à leurs bornes de l'ordre de 3 à 4 V et une capacité individuelle de l'ordre de 100 Wh.

Les premières cellules 11 sont plus précisément prévues pour alimenter le réseau de bord 40 basse tension. Elles sont donc ici en nombre réduit par rapport aux secondes cellules 12. Elles sont ici au nombre de quatre.

Elles sont prévues pour fonctionner entre deux limites de niveau de charge, à savoir entre un seuil inférieur SOCₘᵢₙ (de 8% par exemple) et un seuil supérieur SOCₘₐₓ (de 95% par exemple). Le seuil inférieur SOCₘᵢₙ est notamment prévu de telle sorte que le véhicule puisse rester stationner une durée importante même lorsque les secondes cellules sont déchargées. L'objectif est qu'après une telle durée, le niveau de charge SOC11 de ces premières cellules 11 reste supérieur à un seuil minimum de sécurité SOC_{saf}.

Si elles sont en nombre supérieur ou égal à deux, ces premières cellules 11 sont connectées (au moins en partie) en série entre des premières bornes 18 de connexion émergeant du boîtier 13. On notera ici que l'une de ces deux premières bornes 18 est connectée à la masse tandis que l'autre est connectée au dispositif de coupure de courant 41, via un interrupteur commandé 15 (réalisé par des relais ou par des MOSFET) logé dans le boîtier 13.

Les secondes cellules 12 sont plus précisément prévues pour alimenter le réseau haute tension, donc notamment le moteur électrique 20, à une tension élevée. Elles sont connectées (au moins en partie) en série entre des secondes bornes 19 de connexion émergeant du boîtier 13. On notera ici que ces deux secondes bornes 19 sont connectées au réseau haute tension (ici au moteur électrique 20 et au chargeur 21), via deux interrupteurs commandés 16 logés dans le boîtier 13.

Ces secondes cellules sont par exemple au nombre d'environ 100 ou 200 selon la tension requise par le réseau haute tension (400 ou 800V).

De préférence, le boîtier 13 loge par ailleurs un système de gestion de batterie 14, communément appelé BMS, qui est de préférence unique et qui est connecté aux premières et secondes cellules 11, 12 ainsi qu'aux interrupteurs commandés 15, 16. Dans un autre mode de réalisation, le système de gestion de batterie peut être déporté et être à l'extérieure du boitier 13. Dans cet autre mode, il peut être connecté aux premières et secondes cellules de façon filaire, ou par une liaison sans fil typiquement de type Bluetooth^{®}. Une communication est quoi qu'il en soit établie entre ces composants.

De façon connue, un tel système de gestion de batterie 14 comporte un processeur et permet de surveiller, contrôler et équilibrer les tensions des cellules de la batterie d'accumulateurs 10 afin de maximiser ses performances, sa sécurité et sa durée de vie. Ici, ce système de gestion de batterie 14 est particulier en ce sens qu'il permet d'équilibrer les tensions des premières cellules 11 et d'équilibrer les tensions des secondes cellules 12 de façon dissociée. En effet, les premières cellules pourront présenter des tensions différentes de celles des secondes cellules (les unes étant plus déchargées que les autres). Ce système de gestion de batterie 14 est alors adapté à commander les interrupteurs commandés 15, 16.

Le boîtier 13 loge également un système de refroidissement qui pourra se présenter sous des formes très diverses. De manière très préférentielle, ce système de refroidissement sera conçu pour refroidir les premières et secondes cellules 11, 12, avec une efficacité similaire (à 50% près).

Le véhicule automobile comporte par ailleurs un convertisseur DC-DC 30 comportant deux bornes d'entrée connectées aux deux secondes bornes 19 de la batterie d'accumulateurs 10, et deux bornes de sorties connectées au réseau de bord 40. En pratique, une première de ces bornes de sortie est connectée aux premières cellules 11 tandis que l'autre est connectée au dispositif de coupure de courant 41. L'objectif est que le courant émis par ces bornes de sortie puisse alimenter le réseau de bord 40 et les premières cellules 11.

Ce convertisseur DC-DC 30 pourrait être de type standard, en ce sens qu'il pourrait injecter du courant uniquement dans un sens direct (depuis les secondes cellules 12 vers le réseau de bord 40 et/ou les premières cellules 11).

Toutefois, ce convertisseur DC-DC 30 est de préférence réversible, en ce sens qu'il peut être commandé entre :
- un état direct dans lequel il injecte du courant issu des secondes cellules 12, par exemple pour que ces cellules alimentent le réseau de bord 40 et/ou les premières cellules 11,
- un état inversé dans lequel il injecte du courant issu des premières cellules 11, par exemple pour que ces cellules alimentent le moteur électrique 20 et/ou les secondes cellules 12.

Ainsi, il pourra mettre en œuvre l'ensemble des configurations décrites ci-après. S'il était de type standard, il ne pourrait bien entendu mettre en œuvre qu'une partie de ces configurations.

De préférence, le convertisseur DC-DC 30 peut également être commandé dans un état arrêté dans lequel aucun courant ne le traverse, si bien que les secondes cellules de batterie 12 sont isolées électriquement des premières cellules de batterie 11 et du réseau de bord 40.

On notera ici que le rendement de ce convertisseur DC-DC 30 dépend de l'intensité du courant qui le traverse. En règle générale, lorsque cette intensité augmente depuis 0A jusqu'à un seuil maximum, son rendement varie selon une courbe en forme de cloche : il augmente très rapidement jusqu'à une première intensité (ici 25A), puis plus lentement jusqu'à un maximum, et il diminue lentement ensuite. Autrement formulé, il existe une intensité optimale iₒₚₜ pour laquelle le rendement du convertisseur DC-DC 30 est maximum. S'il est préférable d'utiliser ce convertisseur à cette intensité optimale iₒₚₜ, il est en tout état de cause préférable de ne pas l'utiliser en deçà de la première intensité.

Le calculateur 50 est prévu pour communiquer avec le système de gestion de batterie 14 et avec ce convertisseur DC-DC 30 pour mettre en œuvre les différentes configurations décrites ci-après, selon le point de fonctionnement du véhicule.

On notera ici que le « point de fonctionnement » est définie par des paramètres caractérisant l'état du véhicule, tels que le niveau de charge des premières et/ou secondes cellules de la batterie, et/ou le niveau de consommation de courant par le réseau haute tension, la connexion ou non du chargeur 21 au réseau électrique extérieur 100, la position en mode « parking » ou non d'un levier de commande du groupe motopropulseur ...

Les configurations sont décrites à titre d'exemples non limitatifs, pour illustrer comment le véhicule automobile peut être utilisé et notamment comment le convertisseur DC-DC 30 peut être piloté par le calculateur 50.

Une première configuration est illustrée sur la figure 2.

Dans cette première configuration, on considère que l'usager a branché le chargeur 21 au réseau électrique extérieur 100 et a requis la charge de la batterie d'accumulateurs 10.

On observe sur la figure 2 que le chargeur 21 est connecté de manière à pouvoir charger directement les secondes cellules 12.

La charge des premières cellules 11 n'est pas requise. Elle est toutefois de préférence réalisée, via le convertisseur DC-DC 30.

En effet, comme cela sera expliqué ci-après, il sera préférable de charger ces premières cellules puisque, lorsque leur niveau de charge SOC11 sera suffisamment élevé, elles pourront non seulement alimenter le réseau de bord 40 mais aussi participer à l'alimentation électrique du moteur électrique 20 pendant le roulage ou d'autres composants haute tension (s'il y en a) lorsque le véhicule est réveillé mais pas roulant.

Dans cette configuration de charge, le calculateur 50 pilote alors les interrupteurs commandés 15, 16 à l'état fermé et le convertisseur DC-DC 30 en mode direct, si bien que le courant issu des secondes cellules 12 et/ou du chargeur 21 alimente le réseau de bord 40 et recharge aussi les premières cellules 11.

La recharge de ces dernières s'interrompt lorsque leur niveau de charge SOC11 dépasse un seuil de charge prédéterminé, par exemple le seuil supérieur SOCₘₐₓ. Pour cela l'interrupteur commandé 15 peut être commandé pour s'ouvrir ou, préférablement, le convertisseur DC-DC 30 est piloté pour fournir le courant consommé par le réseau de bord 40.

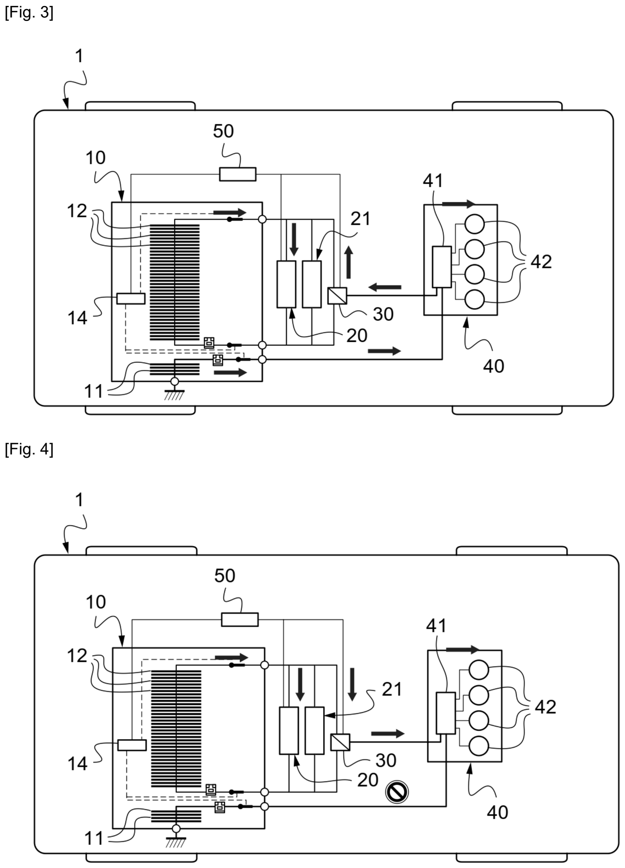

Une deuxième configuration est illustrée sur la figure 3.

Dans cette deuxième configuration, on considère que la batterie d'accumulateurs 10 doit alimenter en courant le réseau haute tension, et que ses premières cellules **11** sont bien chargées.

En pratique, le niveau de charge SOC11 doit par exemple être supérieur à un seuil de charge prédéterminé. Ce seuil de charge est strictement supérieur au seuil inférieur SOCₘᵢₙ. Il est par exemple de 70%.

Alors, le calculateur 50 pilote les interrupteurs commandés 15, 16 à l'état fermé et le convertisseur DC-DC 30 en mode inversé, si bien que le courant issu des secondes cellules 12 alimente le moteur électrique 20 (et/ou d'autres composants haute tension s'il y en a) et que le courant issu des premières cellules 11 alimente le réseau de bord 40 et le moteur électrique 20 (et/ou d'autre composants haute tension s'il y en a).

Cette configuration est utilisée tant que le niveau de charge SOC11 des premières cellules reste supérieur à un autre seuil de charge prédéterminé. En deçà de ce seuil, le calculateur 50 pilote le convertisseur DC-DC 30 en mode arrêté pour que les premières cellules 11 alimentent uniquement le réseau de bord 40.

Cet autre seuil de charge est par exemple égal au seuil inférieur SOCₘᵢₙ. En variante, il peut être supérieur. Il est en tout état de cause choisi pour garantir la fiabilité et la sureté de fonctionnement du véhicule.

On notera que lors de la décharge des premières cellules **11** pour alimenter le moteur électrique 20, le convertisseur DC-DC 30 sera piloté de façon à être utilisé à son rendement optimal. Autrement formulé, l'intensité du courant qui le traversera sera pilotée pour rester sensiblement égale à l'intensité optimale iₒₚₜ.

On notera également que si, après que le convertisseur DC-DC est passé à l'état arrêté, le niveau de charge SOC11 des premières cellules 11 passe sous un seuil qui est inférieur au seuil inférieur SOCₘᵢₙ et qui est considéré très faible (typiquement proche du seuil de sécurité SOC_{saf}), le convertisseur DC-DC 30 pourra être pilot à l'état direct pour alimenter le réseau de bord 40, voire pour recharger les premières cellules 11 au-delà de ce seuil.

Une troisième configuration est illustrée sur la figure 4.

Dans cette troisième configuration, on considère que la batterie d'accumulateurs 10 doit alimenter en courant le réseau haute tension, et que la charge des premières cellules 11 doit être maintenue car proche de la charge minimale.

Alors le calculateur 50 pilote pour cela les interrupteurs commandés 15, 16 à l'état fermé et le convertisseur DC-DC 30 en mode direct, si bien que le courant issu des secondes cellules 12 alimente le moteur électrique 20 et le réseau de bord 40.

Cette configuration, plus connue sous le terme anglais de « floating », permet de maintenir les premières cellules 11 à un niveau de charge SOC11 garantissant la sécurité du véhicule vis-à-vis de toute défaillance.

On notera que l'interrupteur commandé 15 pourrait être commandé à l'état ouvert mais ce n'est préférentiellement pas le cas. En effet, les premières cellules 11 peuvent être utilisées pour compenser les variations très rapides de courant consommé par le réseau de bord 40, lesquelles variations ne pourraient pas être absorbées par le convertisseur DC-DC du fait de son faible temps de réaction.

Cette configuration présente pour inconvénient que le rendement du convertisseur DC-DC 30 n'est pas nécessairement optimal. L'alimentation du réseau de bord 40 requiert en effet généralement une intensité inférieure à l'intensité optimale iₒₚₜ, si bien que le convertisseur DC-DC 30 fonctionne en deçà de son rendement maximum.

La configuration suivante va alors permettre de pallier cet inconvénient.

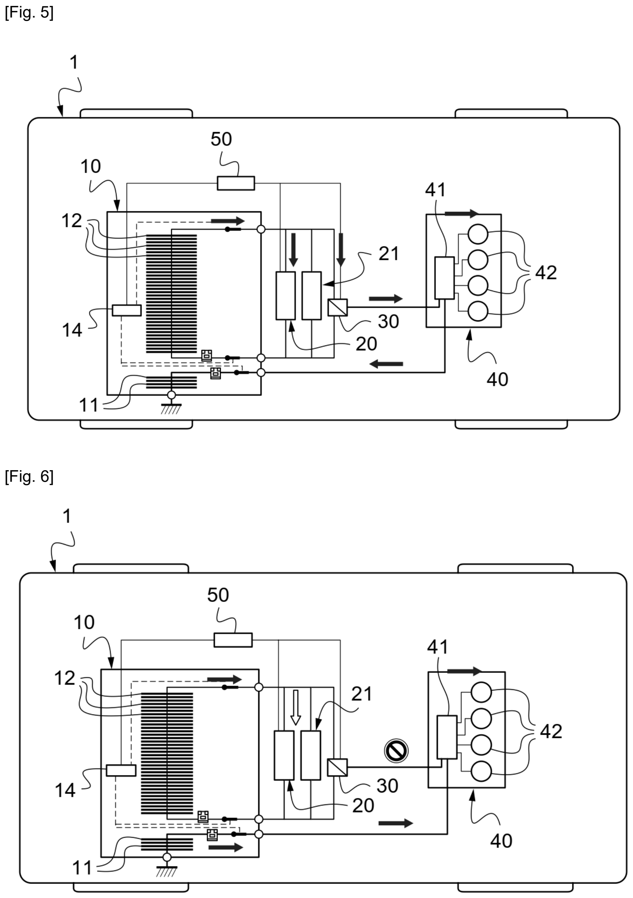

Une quatrième configuration est ainsi illustrée sur la figure 5.

Dans cette quatrième configuration, on considère que la batterie d'accumulateurs 10 doit alimenter en courant le réseau haute tension, que le réseau de bord 40 consomme un courant d'intensité inférieure à l'intensité optimale iₒₚₜ, et que les premières cellules 11 ne sont pas chargées jusqu'à leur seuil supérieur SOCₘₐₓ.

Alors le calculateur 50 pilote les interrupteurs commandés 15, 16 à l'état fermé et le convertisseur DC-DC 30 en mode direct, si bien que le courant issu des secondes cellules 12 alimente le moteur électrique 20, les premières cellules 11 et le réseau de bord 40.

L'objectif à ce stade est que l'intensité du courant consommé par le réseau de bord 40 et par la charge des premières cellules 11 soit égale à l'intensité optimale iₒₚₜ.

En revanche, lorsque le niveau de charge des premières cellules 11 atteint le seuil supérieur SOCₘₐₓ, le calculateur 11 peut commander l'alimentation du réseau de bord 40 et du moteur électrique 20 par les premières cellules 11 (seconde configuration), de façon à ce qu'elles se déchargent, par exemple jusqu'au seuil inférieur SOCₘᵢₙ. Pour cela, le convertisseur DC-DC 30 est commandé en mode inversé.

Une fois ce seuil inférieur atteint, la charge des premières cellules 11 pourra reprendre (quatrième configuration) de façon à optimiser à nouveau le fonctionnement du convertisseur DC-DC 30 en mode direct.

Une cinquième configuration est illustrée sur la figure 6.

Cette configuration est utilisée en variante des seconde et quatrième configurations.

Dans cette cinquième configuration, on considère que la batterie d'accumulateurs 10 doit alimenter en courant le réseau haute tension, et que le réseau de bord 40 consomme un courant d'intensité inférieure à l'intensité optimale iₒₚₜ.

Alors, le calculateur 50 pilote les interrupteurs commandés 15, 16 à l'état fermé et le convertisseur DC-DC 30 en mode arrêté, si bien que le courant issu des secondes cellules 12 alimente le moteur électrique 20, et que le courant issu des premières cellules 11 alimente le réseau de bord 40. Cette configuration permet d'éviter de faire fonctionner le convertisseur DC-DC 30 avec un rendement faible.

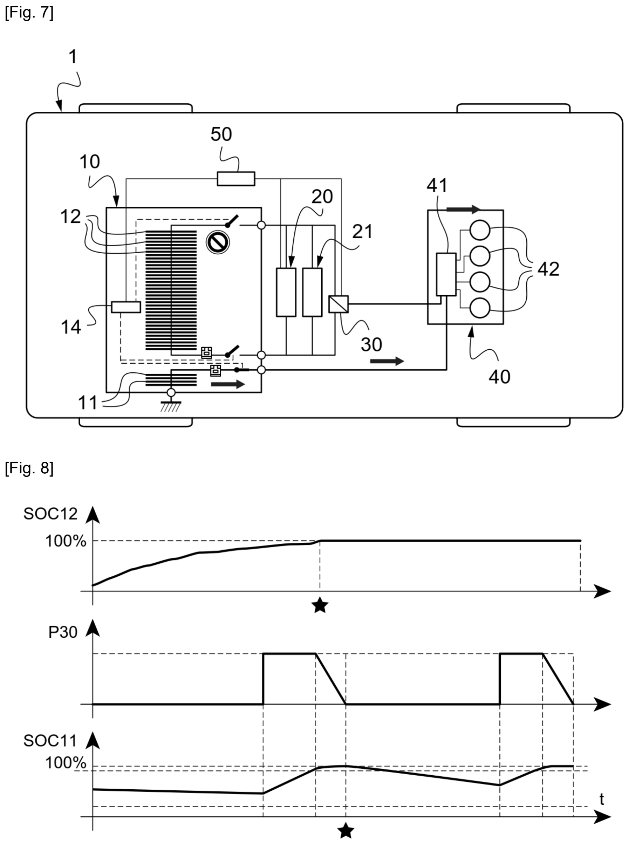

Une sixième configuration est illustrée sur la figure 7.

Dans cette sixième configuration, on considère que le levier de commande du véhicule est en mode parking et que le réseau haute tension ne consomme pas de courant électrique.

Alors (par exemple immédiatement ou, en variante, lorsque le véhicule est stationné depuis une durée prédéterminée), le calculateur 50 pilote les interrupteurs commandés 16 à l'état ouvert pour ne pas utiliser le convertisseur DC-DC 30 avec un rendement très faible. Dès lors, seul le courant électrique issu des premières cellules 11 alimente le réseau de bord 40.

On notera que cette configuration permet aux occupants du véhicule d'utiliser des fonctions du réseau de bord 40, par exemple la radio.

En variante, d'autres configurations pourraient être employées et d'autres ajustements pourraient être réalisés.

Cette sixième configuration est avantageuse du fait de la capacité totale de l'ensemble des premières cellules 11.

En effet, cette capacité est ici de l'ordre de 400 Ah, ce qui est bien supérieur à une capacité de batterie au plomb standard, qui est de l'ordre de 10Ah.

Dès lors, les premières cellules 11 pourront alimenter le réseau de bord sur une durée très longue, sans nécessiter aucune charge. Or, dans les véhicules récents, lorsque le véhicule est stationné, le réseau de bord 40 peut consommer davantage de courant qu'auparavant, par exemple si le propriétaire du véhicule souhaite que les caméras de son véhicule restent actives. Dans une telle configuration, il était nécessaire de recharger la batterie au plomb plusieurs fois par jour pendant le stationnement du véhicule, à l'aide de la batterie principale. Grâce à l'invention, il n'est plus nécessaire de réaliser cette charge aussi souvent (en réveillant de nombreux composants électroniques du véhicule, ce qui s'avérait consommateur de courant).

Ces différentes configurations permettent donc d'illustrer simplement comment la batterie d'accumulateur 10 peut être utilisée.

Dans la suite, on pourra donner quelques exemples supplémentaires permettant de profiter au mieux de l'architecture de cette batterie.

Typiquement, sur la figure 2, on a représenté la première configuration du système, dans laquelle on rappelle que le chargeur 21 est branché au réseau électrique extérieur 100, ce qui permet de recharger toutes les cellules de la batterie d'accumulateurs 10.

Cette configuration, si elle est efficace lorsque le réseau électrique extérieur 100 délivre une tension continue, ne l'est pas autant lorsque le réseau électrique extérieur 100 délivre une tension alternative. En effet, pour une telle charge, on utilise un convertisseur AC-DC qui permet de redresser la tension.

Or, ce convertisseur AC-DC présente un rendement qui varie comme celui du convertisseur DC-DC, si bien qu'il est préférable de ne pas l'utiliser pour des courants de faible intensité.

Dès lors, le mode de fonctionnement où toutes les cellules sont rechargées conjointement n'est pas optimal puisque le convertisseur DC-DC et le convertisseur AC-DC ne sont pas utilisés à leur meilleur rendement.

On sait notamment que plus le niveau de charge des cellules de la batterie augmente, plus le courant de charge doit diminuer. Le risque est donc qu'en fin de charge, l'intensité de charge utilisée soit faible et que le rendement des convertisseurs DC-DC et AC-DC soit dégradé.

Sur la figure 8, on a alors représenté trois courbes illustrant comment le convertisseur DC-DC 30 peut être piloté afin d'assurer la charge des cellules.

La première courbe illustre la variation au cours du temps t du niveau de charge SOC12 des secondes cellules 12.

La seconde courbe illustre la variation au cours du temps t de la puissance électrique délivrée par le convertisseur DC-DC 30.

La troisième courbe illustre la variation au cours du temps t du niveau de charge SOC11 des premières cellules 12.

Initialement, le convertisseur DC-DC 30 est piloté à l'état arrêté, de façon que seules les secondes cellules 12 se chargent. Le niveau de charge SOC12 des secondes cellules 12 étant initialement réduit, l'intensité du courant de charge est alors élevée, si bien que le rendement du convertisseur AC-DC reste élevé.

L'intensité du courant de charge diminue alors progressivement au cours de la charge. Au cours de cette charge, les premières cellules 11 alimentent le réseau de bord 40 et se déchargent donc.

Avant la fin de la charge des secondes cellules 12, le convertisseur DC-DC est piloté à l'état direct de manière qu'il débite un courant d'intensité sensiblement égal à l'intensité optimale. Ainsi alimente-t-il le réseau de bord 40 et les premières cellules 11, qui se rechargent.

Puis, lorsque les secondes cellules 12 sont entièrement changées, la puissance et le rendement du convertisseur diminuent pour finir de charger au besoin les premières cellules.

Si le chargeur reste branché et que le véhicule reste inutilisé pendante une longue période (en pratique plus d'un an), le niveau de charge des premières cellules pourra avoir diminué jusqu'en deçà d'un seuil (SOC_{saf}), si bien que le processus de charge conjointe des premières et secondes cellules pourra recommencer.

En revanche, si le chargeur est débranché et que le véhicule reste inutilisé pendante une longue période (en pratique plus d'un an), le niveau de charge des premières cellules pourra avoir diminué jusqu'en deçà d'un seuil, si bien qu'un processus dit de biberonnage pourra être exécuté. Ce processus consiste à réveiller des composants électroniques du véhicule, à fermer les interrupteurs commandés 15, 16 puis à commander le convertisseur DC-DC 30 en état direct pour que les secondes cellules 12 rechargent les premières cellules 11. Ce processus de biberonnage est consommateur de courant en ce sens qu'il nécessite de réveiller des composants électroniques du véhicule, mais grâce à la capacité totale élevée des premières cellules, il n'est que rarement mis en oeuvre.

On notera que dans le cas où les premières cellules 11 sont très déchargées au début de la charge (avec un niveau de charge SOC11 inférieur à un seuil de charge, typiquement inférieur au seuil inférieur SOCₘᵢₙ ou au seuil de sécurité SOC_{saf}), alors, on pourra commencer par charger conjointement les premières et secondes cellules 11, 12, au meilleur rendement du convertisseur DC-DC. Lorsque les premières cellules seront suffisamment chargées (par exemple au seuil supérieure SOCₘₐₓ), le convertisseur DC-DC pourra être placé à l'état arrêté. La charge des secondes cellules 12 pourra alors se poursuivre de façon classique.

On notera également que dans le cas où, pendant la charge, le réseau de bord 40 consomme une intensité supérieure ou égale à l'intensité optimale iₒₚₜ, le convertisseur DC-DC 30 pourra être piloté à l'état direct pour que les secondes cellules 12 (et/ou le chargeur) alimentent ce réseau de bord 40 à cette intensité optimale, l'intensité restante étant fournie par les premières cellules 11.

Comme décrit précédemment, lorsque les premières cellules **11** seront très déchargées, il sera possible d'augmenter l'intensité traversant le convertisseur DC-DC 30 pour les recharger.

Lors d'un démarrage à froid (typiquement en dessous de 0°C), il est connu que les cellules de batterie ne sont pas en mesure de délivrer la même intensité que lorsqu'elles sont à une température plus élevée.

Alors, les secondes cellules 12 ne seront pas nécessairement en mesure de satisfaire la demande de courant du moteur électrique 20. Dès lors, le calculateur 50 pourra commander le convertisseur DC-DC 30 en mode inversé, de façon à ce que les premières cellules 11 participent à satisfaire cette demande.

Lorsque le véhicule doit freiner, il est connu d'utiliser le moteur électrique 20 comme un alternateur, de façon qu'il transforme l'énergie de freinage en énergie électrique pour charger la batterie d'accumulateurs 10. On parle de régénération.

Or, lorsque la batterie est froide ou que les secondes cellules 12 ont un niveau de charge SOC12 très élevé (typiquement supérieur ou égal au seuil supérieur SOCₘₐₓ), cette régénération n'est plus possible.

Ici, dans cette éventualité, le convertisseur DC-DC 30 pourra être piloté en état direct et à l'intensité maximale iₘₐₓ (exploitant ainsi la grosse capacité des premières cellules 11) pour que l'énergie électrique issue du freinage alimente le réseau de bord 40 et recharge les premières cellules 11 (pour autant que leur niveau de charge ne soit pas supérieur ou égal au seuil supérieur SOCₘₐₓ).

La présente invention n'est nullement limitée aux modes de réalisation décrits et représentés, mais l'homme du métier saura y apporter toute variante conforme à l'invention.

Typiquement, les premières et secondes cellules pourraient être de types différents et/ou délivrer des tensions individuelles différentes. L'objectif étant que les premières cellules branchées ensemble délivre une tension sensiblement égale à la tension requise par le réseau de bord 40, et que les secondes cellules branchées ensemble délivre une tension sensiblement égale à la tension requise par le réseau haute tension.

Dans les exemples donnés ci-dessus, le convertisseur DC-DC 30 est piloté autant que possible pour délivrer une intensité égale à l'intensité optimale iₒₚₜ. Bien entendu, son rendement restant élevé dans une gamme d'intensité connue (typiquement de 25A à 250A), le convertisseur pourra être piloté pour délivrer une intensité différente de l'intensité optimale iₒₚₜ pour autant qu'elle reste dans cette gamme.

De façon plus générale, la présente invention pourrait s'appliquer à des dispositifs autres qu'une voiture, notamment un bateau comportant deux réseaux électriques fonctionnant à des tensions différentes. Elle pourrait également s'appliquer à des dispositifs non mobiles, par exemple à des installations solaires comportant des batteries d'accumulateurs utilisés dans le cadre d'une seconde vie (ces batteries ayant été utilisées précédemment sur véhicules automobiles). Dans tous les cas, le dispositif comportera deux réseaux électriques alimentés à des tensions différentes, une batterie d'accumulateurs équipée d'un chargeur, et un convertisseur DC-DC.

## Revendications

1. Dispositif (1) comportant :
- un premier réseau électrique (40) fonctionnant à une première tension,
- un second réseau électrique fonctionnant à une seconde tension supérieure à la première tension,
- une batterie d'accumulateurs (10), et
- un chargeur adapté à charger la batterie d'accumulateurs (10) et fonctionnant sur l'une des première et seconde tensions,
**caractérisé en ce que** la batterie d'accumulateurs (10) comporte un boîtier (13) qui loge des premières cellules de batterie (11) et des secondes cellules de batterie (12) adaptées à être isolées électriquement des premières cellules de batterie (11), et duquel émergent des premières bornes (18) de connexion des premières cellules de batterie (11) au premier réseau électrique (40) et des secondes bornes (19) de connexion des secondes cellules de batterie (12) au second réseau électrique, et **en ce qu'**il est prévu un convertisseur DC-DC (30) qui est branché, d'un côté, aux secondes bornes de connexion (19), et, de l'autre, au premier réseau électrique (40) et qui est piloté par un calculateur (50).

2. Dispositif (1) selon la revendication 1 formé par un véhicule automobile (1), dans lequel le premier réseau électrique est un réseau électrique de bord (40) et le second réseau électrique comportant au moins une charge formée par un moteur électrique (20) de propulsion du véhicule automobile (1).

3. Dispositif (1) selon la revendication 1 ou 2, dans lequel le boîtier (13) loge :
- un unique système de gestion de batterie (14) qui est adapté à communiquer avec les premières et secondes cellules de batterie (11, 12),
- au moins un premier interrupteur (15) qui s'interpose entre l'une des premières bornes (18) et le premier réseau électrique (40),
- au moins un second interrupteur (16) qui s'interpose entre l'une des secondes bornes (19) et une charge du second réseau électrique, les premier et second interrupteurs (15, 16) étant commandés par le système de gestion de batterie (14), et
- de préférence, un circuit de refroidissement et/ou chauffage adapté à refroidir et/ou chauffer les premières et secondes cellules de batterie (11, 12).

4. Dispositif (1) selon l'une des revendications 1 à 3, dans lequel les premières et secondes cellules de batterie (11, 12) sont toutes identiques.

5. Procédé de pilotage d'un convertisseur DC-DC (30) d'un dispositif (1) conforme à l'une des revendications 1 à 4, dans lequel il est prévu de caractériser un point de fonctionnement du dispositif (1) et de piloter le convertisseur DC-DC (30) en fonction du point de fonctionnement entre :
- un état direct dans lequel le courant issu des secondes cellules de batterie (12) alimentent au moins le premier réseau électrique (40),
- un état inversé dans lequel le courant issu des premières cellules de batterie (11) alimentent au moins une charge (20) du second réseau électrique, et
- éventuellement, un état arrêté dans lequel les secondes cellules de batterie (12) sont isolées électriquement des premières cellules de batterie (11) et du premier réseau électrique (40).

6. Procédé de pilotage selon la revendication 5, dans lequel, lorsque la charge (20) est alimentée en courant par les secondes cellules de batterie (12), il est prévu de :
- déterminer un niveau de charge (SOC11) des premières cellules de batteries (11), puis
- au moins si le niveau de charge (SOC11) mesuré dépasse un premier seuil, piloter le convertisseur DC-DC (30) en état inversé, de préférence à une intensité maximisant le rendement du convertisseur DC-DC (30).

7. Procédé de pilotage selon l'une des revendications 5 et 6, dans lequel, lorsque la charge (20) est alimentée en courant par les secondes cellules de batterie (12), il est prévu de :
- déterminer un niveau de charge (SOC11) des premières cellules de batteries (11), puis
- au moins si le niveau de charge (SOC11) mesuré est inférieur à un second seuil, piloter le convertisseur DC-DC (30) en état direct de telle sorte que les secondes cellules de batteries (12) alimentent le premier réseau électrique (40) et rechargent les premières cellules de batterie (11), de préférence à une intensité maximisant le rendement du convertisseur DC-DC (30).

8. Procédé de pilotage selon la revendication 7, dans lequel si le niveau de charge (SOC11) mesuré est supérieur au second seuil, il est prévu de piloter le convertisseur DC-DC (30) en état inversé.

9. Procédé de pilotage selon l'une des revendications 5 à 8, dans lequel, lorsque la charge (20) est alimentée en courant par les secondes cellules de batterie (12), il est prévu de :
- déterminer l'intensité du courant consommé par le réseau de bord (40), puis
- au moins si l'intensité mesurée est inférieure à un troisième seuil, piloter le convertisseur DC-DC (30) en état arrêté de telle sorte que seules les premières cellules de batterie (11) alimentent le premier réseau électrique (40).

10. Procédé de pilotage selon l'une des revendications 5 à 9, dans lequel, lorsque la charge (20) est à l'arrêt, il est prévu de piloter le convertisseur DC-DC (30) en état arrêté de telle sorte que seules les premières cellules de batterie (11) alimentent le premier réseau électrique (40).

11. Procédé de pilotage selon l'une des revendications 5 à 10, dans lequel, lorsque la batterie d'accumulateurs (10) est connectée à un réseau extérieur de charge (100) via le chargeur, il est prévu de :
- commencer par piloter le convertisseur DC-DC (30) en état arrêté de telle sorte que seules les premières cellules de batterie (11) alimentent le premier réseau électrique (40) et que seules les secondes cellules de batterie (12) se chargent, puis
- avant que les secondes cellules de batterie (12) ne soient complètement chargées, de piloter le convertisseur DC-DC (30) en état direct de telle sorte que les premières et secondes cellules de batterie (11, 12) se chargent, l'intensité traversant le convertisseur DC-DC (30) étant de préférence maintenue à une valeur maximisant le rendement du convertisseur DC-DC (30).
